(19)

Europäisches Patentamt
European Patent Office
Office européen des brevets

(11) **EP 4 245 611 A1**

(12) **EUROPEAN PATENT APPLICATION**
published in accordance with Art. 153(4) EPC

(43) Date of publication:
**20.09.2023 Bulletin 2023/38**

(21) Application number: **21891905.8**

(22) Date of filing: **10.11.2021**

(51) International Patent Classification (IPC):
**B60R 11/02** $^{(2006.01)}$   **G01S 7/03** $^{(2006.01)}$
**B60S 1/02** $^{(2006.01)}$

(52) Cooperative Patent Classification (CPC):
**B60R 11/02; B60S 1/02; G01S 7/03**

(86) International application number:
**PCT/JP2021/041350**

(87) International publication number:
**WO 2022/102659 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.11.2020 JP 2020187520**

(71) Applicant: **AGC INC.**
**Chiyoda-ku,**
**Tokyo 1008405 (JP)**

(72) Inventors:
• **SAITO, Tsunehiro**
**Tokyo 100-8405 (JP)**
• **YONETSU, Hosaku**
**Tokyo 100-8405 (JP)**
• **NAGAI, Kuniko**
**Tokyo 100-8405 (JP)**

(74) Representative: **Müller-Boré & Partner**
**Patentanwälte PartG mbB**
**Friedenheimer Brücke 21**
**80639 München (DE)**

(54) **VEHICULAR RESIN MEMBER, VEHICULAR WINDOW MEMBER, AND VEHICLE**

(57)    To suppress reduction in detection accuracy of a sensor. A vehicle resin member (20) includes: a resin member (30) having an opening (32) that passes from a first surface (30A) on the outside of a vehicle to a second surface (30B) on the inside of the vehicle; a transmission member (42) exposed on the first surface (30A) through the opening (32); and a sensor (44) provided in a first direction from the first surface (30A) toward the second surface (30B) with respect to the transmission member (42). The vehicle resin member (20) is attached to a window member of the vehicle such that the opening (32) does not overlap the window member and is positioned out of reach of a wiper provided to the window member.

FIG.3

## Description

Field

The present invention relates to a vehicle resin member, a vehicle window member, and a vehicle.

Background

In recent years, vehicles are equipped with various sensors, such as cameras. Such sensors may be disposed on the inner side of a window glass. In this case, however, the detection accuracy of the sensor may possibly be reduced because the sensor performs sensing through the window glass. If an infrared camera is disposed on the inner side of the window glass, for example, the detection accuracy may possibly be reduced because glass is less likely to transmit infrared rays.

Patent Literature 1 describes a technology of providing a cover that transmits infrared light to the upper part of a window glass and disposing an infrared camera inside the cover.

Citation List

Patent Literature

Patent Literature 1: U.S. Unexamined Patent Application Publication No. 2007/0216768

Summary

Technical Problem

To mount the sensor on the vehicle, however, there is room for improvement in suppressing reduction in detection accuracy of the sensor.

In view of the disadvantage described above, an object of the present invention is to provide a vehicle resin member, a vehicle window member, and a vehicle that can suppress reduction in detection accuracy of a sensor. Solution to Problem

To solve the problem above, a vehicle resin member comprises: a resin member having an opening that passes from a first surface on an outside of a vehicle to a second surface on an inside of the vehicle; a transmission member exposed on the first surface through the opening; and a sensor provided in a first direction from the first surface toward the second surface with respect to the transmission member, wherein the vehicle resin member is attached to a window member of the vehicle such that the opening does not overlap the window member and is positioned out of reach of a wiper provided to the window member.

To solve the problem above, a vehicle window member comprises the vehicle resin member and a window member, wherein the resin member is attached to the window member of the vehicle such that the opening does not overlap the window member and is positioned out of reach of a wiper provided to the window member.

To solve the problem above, a vehicle comprises the vehicle window member.

Advantageous Effects of Invention

The present invention can suppress reduction in detection accuracy of a sensor.

Brief Description of Drawings

FIG. 1 is a schematic front view of a vehicle according to the present embodiment.
FIG. 2 is a schematic of a vehicle window member.
FIG. 3 is a schematic sectional view of a vehicle resin member according to the present embodiment.
FIG. 4A is a partial sectional view of an example of a direction for attaching a resin member to a window member.
FIG. 4B is a partial sectional view of an example of the direction for attaching the resin member to the window member.
FIG. 4C is a partial sectional view of an example of the direction for attaching the resin member to the window member.
FIG. 4D is a partial sectional view of an example of the direction for attaching the resin member to the window member.
FIG. 4E is a partial sectional view of an example of the direction for attaching the resin member to the window member.
FIG. 5 is a schematic front view of the vehicle according to another example of the present embodiment.
FIG. 6 is a schematic of another example of a transmission member.
FIG. 7A is a schematic sectional view of the vehicle resin member according to an embodiment A.
FIG. 7B is a schematic sectional view of the vehicle resin member according to another example of the embodiment A.
FIG. 7C is an enlarged front view of an opening according to the other example of the embodiment A.
FIG. 8A is a schematic sectional view of the vehicle resin member according to an embodiment B.
FIG. 8B is an enlarged front view of the opening according to the embodiment B.
FIG. 9 is a schematic sectional view of the vehicle resin member according to an embodiment C.
FIG. 10 is a schematic of another example of the transmission member.
FIG. 11A is a schematic sectional view of the vehicle resin member according to an embodiment D.
FIG. 11B is a schematic sectional view of the transmission member of the vehicle resin member according to the embodiment D in a planar direction.

Description of Embodiments

Exemplary embodiments according to the present invention are described below in greater detail with reference to the accompanying drawings. The embodiments are not intended to limit the present invention. If there are a plurality of embodiments, a combination of the embodiments is also included in the present invention. Numerical values include those rounded off.

(Vehicle)

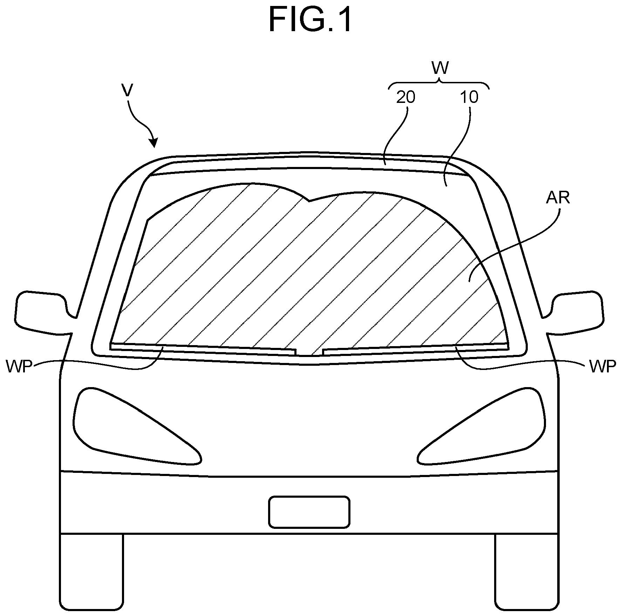

FIG. 1 is a schematic front view of a vehicle according to the present embodiment. As illustrated in FIG. 1, a vehicle V according to the present embodiment includes a vehicle window member W. The vehicle window member W is a member serving as a window of the vehicle V. The vehicle window member W according to the present embodiment is a window member provided to the front surface of the vehicle V. In other words, the vehicle window member W is used as a front window, that is, a windshield of the vehicle V. The vehicle window member W, however, is not necessarily used as a front window of the vehicle V. The vehicle window member W may be used as a window on the rear side of the vehicle V, that is, a rear window or as a window on the side of the vehicle V, that is, a side window, for example. In the following description, a Z1 direction refers to a direction from the outer surface toward the inner surface of the vehicle window member W with the vehicle window member W mounted on the vehicle V. A Z2 direction refers to a direction from the inner surface toward the outer surface of the vehicle window member W, that is, the direction opposite to the Z1 direction.

The vehicle V is provided with wipers WP. The wipers WP are attached to the outer surface of the vehicle window member W. The wipers WP are driven by a drive mechanism, which is not illustrated, mounted on the vehicle V to wipe the surface of the vehicle window member W in the Z2 direction (on the outside of the vehicle) and remove water or the like on the surface of the vehicle window member W in the Z2 direction. The region where the wipers WP can wipe the surface of the vehicle window member W in the Z2 direction is hereinafter referred to as a wiper region AR. In other words, the wiper region AR indicates a region within reach of the wipers WP in the entire surface of the vehicle window member W in the Z2 direction. In other words, the wiper region AR occupies not the entire surface of the vehicle window member W in the Z2 direction but only part of the surface of the vehicle window member W in the Z2 direction. In the example according to the present embodiment, the wiper region AR occupies a region lower than a region near the upper end of the surface of the vehicle window member W in the Z2 direction.

(Window member)

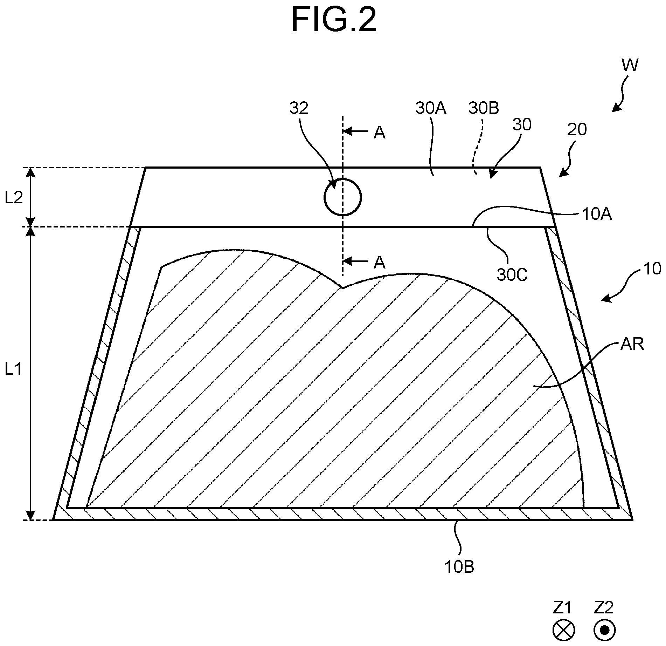

FIG. 2 is a schematic of the vehicle window member. FIG. 2 is a schematic obtained by extracting the vehicle window member W from FIG. 1. The vehicle window member W includes a window member 10 and a vehicle resin member 20. The window member 10 is a member constituting a window of the vehicle V and transmits visible light. Passengers of the vehicle V can visually recognize the outside scenery through the window member 10. The window member 10 may be at least partially made of a glass member. Examples of the glass member include soda-lime glass, borosilicate glass, aluminosilicate glass, etc. The window member 10 may be a laminated glass with an interlayer interposed between a pair of glass substrates. In this case, the interlayer may be made of a resin member that transmits visible light, such as polyvinyl butyral (hereinafter, also referred to as PVB) modified material, ethylene-vinyl acetate copolymer (EVA)-based material, urethane resin material, and polyvinyl chloride material. The window member 10 may be made of resin. Examples of the resin constituting the window member made of resin include, polycarbonate, composite resin of cellulose nanofibers and polycarbonate, etc.

(Vehicle resin member)

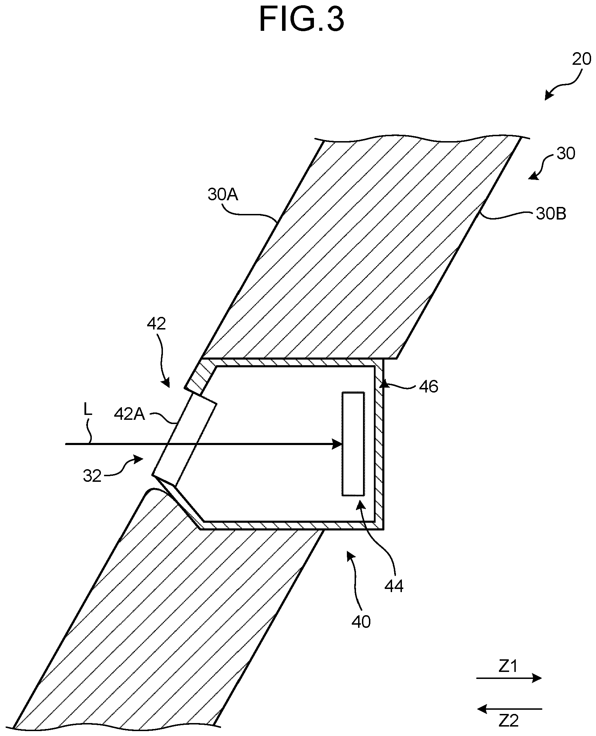

The vehicle resin member 20 is attached to the window member 10. FIG. 3 is a schematic sectional view of the vehicle resin member according to the present embodiment. FIG. 3 is a sectional view along line A-A of FIG. 2. As illustrated in FIG. 3, the vehicle resin member 20 includes a resin member 30 and a sensor unit 40. The sensor unit 40 will be described later.

(Resin member)

The resin member 30 is a member made of resin attached to the window member 10. The coefficient of linear expansion of the resin member 30 is preferably close to the coefficient of linear expansion of the window member 10 (approximately $9\times10^{-6°}C^{-1}$). Specifically, the coefficient of linear expansion of the resin member 30 is preferably $80\times10^{-6°}C^{-1}$ or lower, more preferably $60\times10^{-6°}C^{-1}$ or lower, and still more preferably $50\times10^{-6°}C^{-1}$ or lower. The coefficient of linear expansion described above is a value measured in accordance with Japanese Industrial Standards (JISK7140-1-2008) .

While the shape of the resin member 30 according to the present embodiment is not particularly limited, it may be a plate shape with a thickness of 2 to 30 mm, for example. The thickness of the resin member 30 is not necessarily uniform and may be appropriately adjusted according to the required strength and the performance or mounting structure of the sensor or the like mounted thereon.

The resin member 30 according to the present embodiment may or may not be painted to be provided to the vehicle V. To provide the resin member 30 according to the present embodiment over a wide range like the shape illustrated in FIG. 1, the resin member 30 according to the present embodiment is preferably painted in the same color as that of the vehicle body part other than the resin member 30 or in the color of ceramic (mainly black) of the peripheral part of the glass for the reason of appearance. The vehicle body part is a part other than the window member. Usually, the vehicle body substantially hardly transmits visible light, and the passengers do not visually recognize the outside scenery through the vehicle body.

By contrast, the resin member 30 according to the present embodiment preferably has high weather resistance because the resin member 30 is directly exposed to sunlight, outside air, rain, and other environments if it is not painted. The weather resistance can be improved by coloring the resin member 30 according to the present embodiment black or by including UV absorber, antioxidant, and other substances in the resin member 30 according to the present embodiment.

It is undesirable in appearance that the mounting structure of an in-vehicle member, such as the sensor unit 40, can be visually recognized from the outside of the vehicle. Therefore, the resin member 30 according to the present embodiment preferably has low visible light transmittance if it is not painted. Specifically, the visible light transmittance is preferably 50% or lower, and more preferably 20% or lower. The visible light transmittance described above means the visible light transmittance derived conforming to Japanese Industrial Standards (JIS R3212-2015).

The resin member 30 according to the present embodiment preferably has excellent heat resistance because the region in which the resin member 30 is attached is a region where the temperature is relatively likely to rise due to sunlight and other factors. Specifically, the deflection temperature under load of the resin member 30 is preferably 50°C or higher, more preferably 70°C or higher, and still more preferably 90°C or higher. The deflection temperature under load described above means a value measured conforming to Japanese Industrial Standards (JIS K7191-2-2007, 0.45 MPa).

The coefficient of linear expansion of the resin member 30 is preferably close to the coefficient of linear expansion of the window member 10 (approximately $9 \times 10^{-6}$°C$^{-1}$). Specifically, the coefficient of linear expansion of the resin member 30 is preferably $80 \times 10^{-6}$°C$^{-1}$ or lower, more preferably $60 \times 10^{-6}$°C$^{-1}$ or lower, and still more preferably $50 \times 10^{-6}$°C$^{-1}$ or lower. The coefficient of linear expansion described above is a value measured in accordance with Japanese Industrial Standards (JISK7140-1-2008).

The resin used for the resin member 30 is not particularly limited. The resin serving as the material of the resin member 30 according to the present embodiment may be mixed with a filler for various purposes, such as improvement in dimensional stability and heat resistance, improvement in thermal functions, such as imparting flame resistance, improvement in mechanical properties, such as strength and wear resistance, and improvement in electrical, magnetic, and sound insulating properties. The shape of the filler is not limited and may be a spherical, hollow, granular, plate, rod, or fibrous shape, for example. The material of the filler is also not limited and may be glass, inorganic salt, such as calcium carbonate, carbon, or aramid, for example.

The material of the resin member 30 according to the present embodiment is fiber-reinforced plastic, for example. Examples of the fiber-reinforced plastic include carbon fiber reinforced plastic (CFRP), cellulose nanofiber (CNF) reinforced plastic, glass fiber reinforced plastic (GFRP), aramid fiber reinforced plastic (AFRP), etc.

The material of the resin member 30 according to the present embodiment may be non-fiber-reinforced plastic. The material of the resin member 30 may be polyvinyl chloride (PVC), acrylonitrile butadiene styrene copolymer (ABS), acrylic (PMMA), polyamide resin (PA, including nylon), polyacetal (POM), polybutylene terephthalate (PBT), polyethylene terephthalate (PET), polycarbonate (PC), polyphenylene sulfide (PPS), polyetherketone (PEEK), polyethersulfone (PES), polypropylene (PP), polyethylene (PE), and the like. To improve performance, two or more of these substances can be mixed and used as polymer alloy.

Additives may be added to the resin member 30 according to the present embodiment to such an extent that they do not compromise the advantageous effects of the present disclosure. For example, UV absorber and antioxidant, for example, may be added. The resin member 30 according to the present embodiment may be subjected to processing, such as coating, to such an extent that it does not compromise the advantageous effects of the present disclosure.

While the method for manufacturing the resin member 30 according to the present embodiment is not particularly limited, the resin member 30 is manufactured by injection molding, example.

(Opening of the resin member)

As illustrated in FIG. 3, an opening 32 is formed in the resin member 30. The opening 32 is a through hole that passes through the resin member 30 from a first surface 30A to a second surface 30B. The surface 30A is the surface of the resin member 30 in the Z2 direction, that is, the surface on the outside of the vehicle, and the surface 30B is the surface of the resin member 30 in the Z1 direction, that is, the surface on the inside of the vehicle.

The opening 32 is broadly classified into an opening with a relatively small diameter (e.g., lens according to an embodiment A) and an opening with a large diameter (e.g., LIDAR scanner according to an embodiment B), which will be described later.

(Attaching position of the resin member)

As illustrated in FIG. 2, the resin member 30 is attached to the window member 10. The resin member 30 according to the present embodiment is attached to the window member 10 such that it does not overlap the window member 10 when viewed from the Z1 direction (Z2 direction). The resin member 30, however, may at least partially overlap the window member 10 when viewed from the Z1 direction (Z2 direction). The resin member 30 is preferably attached to the window member 10 such that the opening 32 does not overlap the window member 10 when viewed from the central axis direction of the opening 32.

As illustrated in FIG. 2, the resin member 30 according to the present embodiment is attached to the window member 10 such that it is positioned outside the wiper region AR. In other words, the resin member 30 is attached at a position out of reach of the wipers WP. The resin member 30, however, may be at least partially positioned in the wiper region AR. The resin member 30 is preferably attached to the window member 10 such that the opening 32 is positioned outside the wiper region AR, that is, the opening 32 is positioned out of reach of the wipers WP.

As illustrated in FIG. 2, the resin member 30 has an attachment part 30C serving as a part attached to the window member 10 and is attached to the window member 10 with the attachment part 30C interposed therebetween. In the present embodiment, the lower end corresponding to the end on the lower side in the vertical direction when the resin member 30 is mounted on the vehicle V is used as the attachment part 30C. The attachment part 30C serving as the lower end of the resin member 30 is attached to an upper end 10A of the window member 10. Thus, the resin member 30 is disposed on the upper part of the window member 10. The upper end 10A of the window member 10 is the end on the upper side in the vertical direction when the window member 10 is mounted on the vehicle V. The upper part of the window member 10 refers to a position upper than the window member 10 in the vertical direction when the window member 10 is mounted on the vehicle V. In the following description, a lower end 10B of the window member 10 refers to the end on the lower side in the vertical direction when the window member 10 is mounted on the vehicle V.

As illustrated in FIG. 2, a height L2 of the resin member 30 is preferably smaller than a height L1 of the window member 10. The height L2 of the resin member 30 is preferably 5 mm to 200 mm, more preferably 10 mm to 150 mm, and still more preferably 10 mm to 100 mm. The height L2 of the resin member 30 is preferably 20% or less of the height L1 of the window member 10, more preferably 1% to 15%, and still more preferably 1% to 10%. By setting the height L2 within this range, the wipers WP can wipe a wide range of the surface of the window member 10 and be prevented from overlapping the resin member 30. The height L1 refers to the length of the window member 10 from the upper end 10A to the lower end 10B on the outer surface of the window member 10. If the surface of the window member 10 is a curved surface, for example, the height L1 may be the length from the upper end 10A to the lower end 10B in a direction tangent to the surface of the window member 10 at the center point of the window member 10. The center point of the window member 10 refers to the center position of the window member 10 when viewed from the thickness direction of the window member 10. The height L2 refers to the length from the upper end to the lower end of the resin member 30 in a direction along the surface 30A of the resin member 30. If the surface 30A of the resin member 30 is a curved surface, for example, the height L2 may be the length from the upper end to the lower end in a direction tangent to the surface 30A of the resin member 30 at the center point of the resin member 30. The center point of the resin member 30 refers to the center position of the resin member 30 when viewed from the thickness direction of the resin member 30. The upper end and the lower end of the resin member 30 refer to the end on the upper side in the vertical direction and the end on the lower side in the vertical direction when the resin member 30 is mounted on the vehicle V.

As described above, the resin member 30 is attached to the upper part of the window member 10. The resin member 30, however, is not necessarily attached to the upper part of the window member 10. For example, the resin member 30 may be attached to the window member 10 such that the opening 32 does not overlap the window member 10 and is formed at a position outside the wiper region AR and other than the upper part of the window member 10 (e.g., a position next to the window member 10).

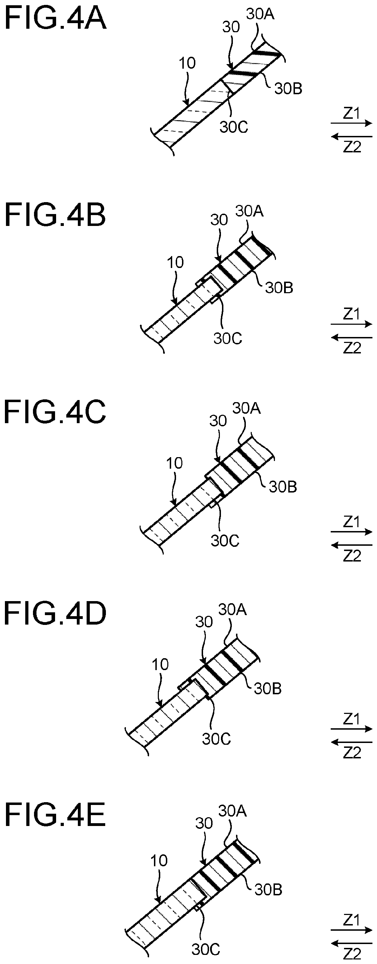

The resin member 30 may be attached to the window member 10 at the attachment part 30C by any desired method. Examples of the attachment method are described below. FIGS. 4A to 4E are partial sectional views of examples of a direction for attaching the resin member to the window member. The attachment part 30C is joined to the window member 10 (in this case, the upper end 10A of the window member 10) by adhesive, for example. The structure of the joint between the attachment part 30C and the upper end 10A of the window member 10 may be a structure in which the end surfaces of the attachment part 30C and the upper end 10A of the window member 10 are in contact with each other as illustrated in FIG. 4A. As illustrated in FIG. 4B, the attachment part 30C may have a structure in which the portion on the surface 30A and the portion on the surface 30B protrude in a direction along the surface 30A, and the upper end 10A of the window member 10 is fitted between the protrusions. As illustrated in FIGS. 4C and 4D, the attachment part 30C may have a structure in which one of the portion on the surface 30A and the portion on the surface 30B protrudes farther than the other does in the direction along the surface 30A, and the upper end 10A of the window member 10 is fitted between the protrusions. As illustrated in FIG. 4E, it is preferable that the surface 30A be flush with the outer surface of the window member 10 from the viewpoint of preventing noise due to aerodynamics and wind noise. In this case, it is preferable to color the part of the window member 10 in contact with the attachment part 30C black to prevent the attachment part 30C from being visually recognized from the surface 30A. The structures illustrated in FIGS. 4B to 4D are preferable from the viewpoint of strength, and in particular the structures illustrated in FIGS. 4B and 4C are preferable from the viewpoint of strength against impact from the outside of the vehicle. A small gap, which is not illustrated, may be formed between the resin member 30 and the upper end of the window member 10. Forming the gap between the resin member 30 and the upper end of the window member 10 can prevent the adhesive or the resin member 30 from colliding with the upper end of the window member 10 due to vibrations and breaking the window member 10.

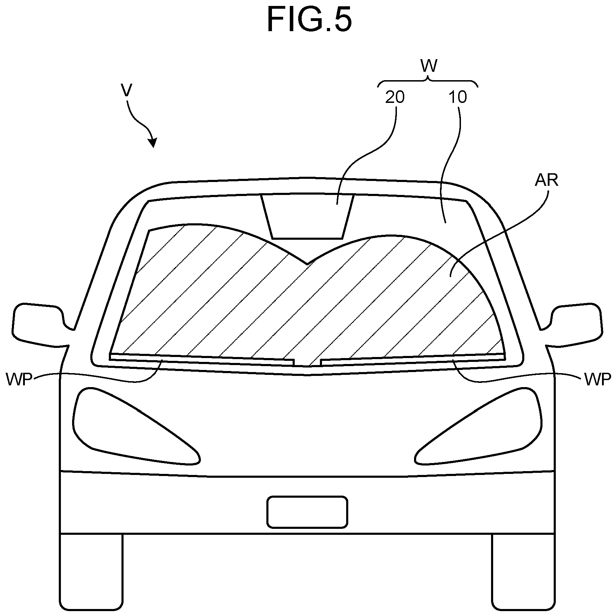

FIG. 5 is a schematic front view of the vehicle according to another example of the present embodiment. As illustrated in FIGS. 1 and 2, the resin member 30 according to the present embodiment is provided over the entire part in the width direction of the window member 10. The resin member 30, however, is not necessarily provided over the entire part in the width direction of the window member 10 and may be provided to a part in the width direction of the window member 10 as illustrated in FIG. 5, for example.

(Sensor unit)

The sensor unit 40 illustrated in FIG. 3 is a device that detects electromagnetic waves L. The electromagnetic waves L may be electromagnetic waves at any desired wavelength, such as ultraviolet rays, visible light, near-infrared rays, far-infrared rays, and millimeter waves. In other words, the sensor unit 40 may be a visible light camera that detects visible light, a light detection and ranging (LIDAR) sensor that detects near-infrared rays, a far-infrared camera that detects far-infrared rays, or a millimeter wave radar that detects millimeter waves, for example. Ultraviolet rays herein refer to electromagnetic waves in a wavelength band from 280 nm to 380 nm, for example. Visible light herein refers to electromagnetic waves in a wavelength band from 380 nm to 800 nm, for example. Near-infrared rays refer to electromagnetic waves in a wavelength band from 800 nm to 3 $\mu$m, for example. Far-infrared rays refer to electromagnetic waves in a wavelength band from 4 um to 1000 $\mu$m, for example. Millimeter waves refer to electromagnetic waves in a wavelength band from 1 mm to 1 cm, for example. Ranges from 360 nm to 830 nm, from 830 nm to 1.5 um, from 8 um to 13 um, and from 1 mm to 1 cm herein refer to ranges of 360 nm to 830 nm, 830 nm to 1.5 um, 8 um to 13 $\mu$m, and 1 mm to 1 cm, and the same applies thereafter.

The sensor unit 40 is provided in the opening 32 in the example in FIG. 3. The sensor unit 40 is not necessarily provided in the opening 32. The sensor unit 40 may be at least partially disposed in the Z1 direction with respect to the opening 32 (on the inside of the vehicle), that is, in the Z1 direction with respect to the surface 30B of the resin member 30. It is preferable that the outermost surface of the sensor unit 40 and the surface 30A of the resin member 30 be disposed in a shape with as little unevenness as possible from the viewpoint of noise prevention.

The sensor unit 40 includes a transmission member 42 that transmits the electromagnetic waves L, a sensor 44 that detects the electromagnetic waves L, and a storage part 46 that houses the sensor 44.

(Transmission member)

The transmission member 42 is a member that transmits the electromagnetic waves L. Transmission herein means that the transmittance for the electromagnetic waves L is 50% or higher, for example. The transmittance of the transmission member 42 is preferably 80% or higher, and more preferably 90% or higher. The transmission member 42 may be made of any desired material as long as it transmits the electromagnetic waves L. If the electromagnetic waves L are ultraviolet rays, for example, the transmission member 42 is preferably a glass plate not including an interlayer. The glass plate is made of various types of glass, such as typical soda-lime glass, aluminosilicate glass, borosilicate glass, and silica glass. The glass may be physically or chemically strengthened. If the electromagnetic waves L are millimeter waves, for example, the material of the transmission member 42 is preferably resin with low radio wave loss, such as polycarbonate. If the electromagnetic waves L are visible light, for example, the transmission member 42 is preferably colorless soda-lime glass, aluminosilicate glass, borosilicate glass, silica glass, or other glass. If the electromagnetic waves L are near-infrared rays, for example, the transmission member 42 is preferably colorless soda-lime glass, high infrared transmission glass with low infrared absorption as described in WO2020/017495, or transparent resin, such as polycarbonate. If the electromagnetic waves L are far-infrared rays, the transmission member 42 is preferably ZnS, Ge, Si, or chalcogenite glass, for example. In this case, the preferred composition of chalcogenide glass is:

Ge+Ga; 7% to 25%,
Sb; 0% to 35%,
Bi; 0% to 20%,
Zn; 0% to 20%,
Sn; 0% to 20%,
Si; 0% to 20%,
La; 0% to 20%,
S+Se+Te; 55% to 80%,
Ti; 0.005% to 0.3%,

Li+Na+K+Cs; 0% to 20%, and
F+Cl+Br+I; 0% to 20% in atomic percentage. The glass preferably has a glass transition temperature (Tg) of 140°C to 550°C.

The transmission member 42 is exposed in the Z2 direction through the opening 32. In other words, the transmission member 42 is exposed through the opening 32 to the space in the Z2 direction with respect to the surface 30A of the resin member 30 (space on the outside of the vehicle). In other words, the transmission member 42 is exposed on the surface 30A without being covered by the resin member 30 when viewing the opening 32 from the Z2 direction. When the surface of the transmission member 42 in the Z2 direction is referred to as an exposed surface 42A, it can also be said that the exposed surface 42A is exposed in the Z2 direction through the opening 32.

In the example in FIG. 3, the transmission member 42 is disposed in the opening 32. The transmission member 42, however, is not necessarily disposed in the opening 32. The transmission member 42 may be at least partially disposed in the Z1 direction with respect to the opening 32 (on the inside of the vehicle), that is, in the Z1 direction with respect to the surface 30B of the resin member 30. It is preferable that the exposed surface 42A of the transmission member 42 and the surface 30A of the resin member 30 be substantially flush with each other from the viewpoint of noise prevention. While being substantially flush with each other herein refers to the state where the exposed surface 42A of the transmission member 42 and the surface 30A of the resin member 30 are flush with each other, it also includes the state where the exposed surface 42A and the surface 30A are misaligned within the range of typical tolerance. The transmission member 42 may be disposed with the exposed surface 42A inclined with respect to the surface 30A of the resin member 30.

In the example in FIG. 3, the transmission member 42 is a lens provided on the farthest side of the sensor unit 40 in the Z2 direction, that is, at the position closest to the side on which the electromagnetic waves L are incident. The transmission member 42 according to the present embodiment is supported by the storage part 46 such that the exposed surface 42A faces the Z2 direction and is exposed to the outside from the storage part 46.

(Sensor)

The sensor 44 is a device that detects the electromagnetic waves L. More specifically, the sensor 44 is an imaging device that detects the intensity or the like of the electromagnetic waves L by receiving the electromagnetic waves L and converting them into electrical signals. If the electromagnetic waves L are ultraviolet rays, for example, the sensor 44 may be a sensor with an ultraviolet ray receiver. If the electromagnetic waves L are visible light, the sensor 44 may be a charged coupling device (CCD), complementary metal oxide semiconductor (CMOS), or other devices. If the electromagnetic waves L are near-infrared rays or far-infrared rays, the sensor 44 may be an infrared imaging device. If the electromagnetic waves L are millimeter waves, the sensor 44 may be an imaging device that can detect millimeter waves. The sensor unit 40 may further include an irradiation source that outputs the electromagnetic waves L. In this case, the sensor 44 receives the electromagnetic waves L output from the irradiation source and reflected by an object.

The sensor 44 is provided in the Z1 direction with respect to the transmission member 42. In other words, the sensor 44 is provided in the traveling direction of the electromagnetic waves L with respect to the transmission member 42. The sensor 44 according to the present embodiment is provided in the storage part 46 and is fixed at the position in the Z1 direction with respect to the position where the transmission member 42 is supported. In the example in FIG. 3, the sensor 44 is disposed in the opening 32. The sensor 44, however, is not necessarily disposed in the opening 32. The sensor 44 may be at least partially disposed in the Z1 direction with respect to the opening 32 (on the inside of the vehicle), that is, in the Z1 direction with respect to the surface 30B of the resin member 30.

(Storage part)

The storage part 46 is a housing that supports the transmission member 42 and houses the sensor 44. In the example according to the present embodiment, the storage part 46 is a cylindrical housing extending from the end in the Z1 direction to the end in the Z2 direction. The storage part 46 is provided with the transmission member 42 at the end in the Z2 direction such that the exposed surface 42A is exposed to the outside from the storage part 46. The storage part 46 is closed at the end in the Z1 direction. The storage part 46 houses the sensor 44 at a position in the Z1 direction with respect to the end in the Z2 direction. While only the transmission member 42 and the sensor 44 are provided in the storage part 46 in the example in FIG. 3, an optical member may be provided between the transmission member 42 and the sensor 44. The storage part 46 may have any desired shape. The storage part 46 does not necessarily have a cylindrical shape and may have a polygonal cylindrical shape, for example.

In the example in FIG. 3, the storage part 46 is disposed in the opening 32. The storage part 46, however, is not necessarily disposed in the opening 32. The storage part 46 may be at least partially disposed in the Z1 direction with respect to the opening 32 (on the inside of the vehicle), that is, in the Z1 direction with respect to the surface 30B of the resin member 30. The storage part 46 is not an essential component, and the transmission member 42 and the sensor 44 are not necessarily supported and housed in the storage part 46.

The sensor unit 40 has the configuration described above. In the sensor unit 40, the electromagnetic waves L traveling in the Z1 direction toward the inside of the opening 32 are incident on the exposed surface 42A of the transmission member 42. The electromagnetic waves L incident on the exposed surface 42A are output from the surface opposite to the exposed surface 42A of the transmission member 42 and are incident on the light-receiving surface of the sensor 44. Thus, the sensor unit 40 detects the electromagnetic waves L.

As described above, in the vehicle window member W according to the present embodiment, the resin member 30 is attached to the window member 10, and the sensor unit 40 is attached to the resin member 30. The resin member 30 has the opening 32, and the sensor unit 40 receives the electromagnetic waves L incident on the opening 32. Therefore, the present embodiment prevents the electromagnetic waves L from being blocked by the window member 10, thereby properly detecting the electromagnetic waves L. With the opening 32 formed in the resin member 30, the present embodiment is preferable in the viewpoint of cost, workload, and processing accuracy compared with a case where an opening is formed in glass, for example. Furthermore, if the resin member is provided separately from the window member, the opening in the resin member may possibly be blocked by the wipers. As a result, the sensor may possibly fail to properly receive the electromagnetic waves L, resulting in reduced detection accuracy of the sensor. By contrast, the resin member 30 according to the present embodiment is attached to the window member 10 such that the opening 32 is positioned outside the wiper region AR. Therefore, the present embodiment can prevent the opening 32 from being blocked by the wipers WP, thereby enabling the sensor to properly receive the electromagnetic waves L. Thus, the present embodiment can suppress reduction in detection accuracy of the sensor.

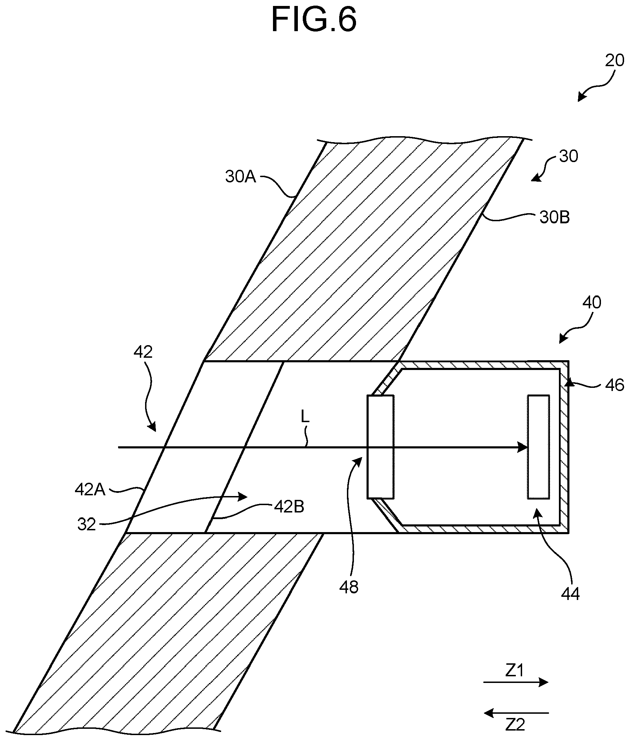

FIG. 6 is a schematic of another example of the transmission member. While the transmission member 42 in the description above is a lens provided at the position closest to the side on which the electromagnetic waves L are incident in the sensor unit 40, the embodiment is not limited thereto. As illustrated in FIG. 6, for example, the transmission member 42 may be a cover that protects the sensor unit 40. In this case, the sensor unit 40 includes the transmission member 42, the sensor 44, the storage part 46, and a lens 48. The lens 48 is supported by the storage part 46 such that the light-receiving surface faces the Z2 direction. The sensor 44 is provided in the Z1 direction with respect to the lens 48. The transmission member 42 is disposed in the Z2 direction with respect to the lens 48 and is exposed in the Z2 direction through the opening 32. In the example in FIG. 6, the transmission member 42 is preferably provided so as to block the opening 32 because it functions as a cover.

In the example in FIG. 6, the electromagnetic waves L traveling in the Z1 direction toward the inside of the opening 32 are incident on the exposed surface 42A of the transmission member 42. The electromagnetic waves L incident on the exposed surface 42A are output from the surface opposite to the exposed surface 42A of the transmission member 42, pass through the lens 48, and are incident on the light-receiving surface of the sensor 44. Thus, the sensor unit 40 detects the electromagnetic waves L.

In the description above, one opening 32 is formed in the resin member 30, and one sensor unit 40 is provided to the opening 32. The embodiment is not limited thereto, and a plurality of sensor units 40 may be provided to one opening 32, for example. Alternatively, a plurality of openings 32 may be formed in the resin member 30, and one sensor unit 40 may be provided to each of the openings 32, or a plurality of sensor units 40 may be provided to each of the openings 32, for example.

As described above, the resin member 30 is attached to the window member 10 such that the opening 32 is positioned outside the wiper region AR. The exposed surface 42A of the transmission member 42 is exposed to the outside through the opening 32. As a result, water or foreign matter may possibly adhere to the exposed surface 42A, resulting in reduced accuracy of detecting the electromagnetic waves L. To address this, the present embodiment is preferably provided with a gas supply unit 60 to inject gas AR supplied from the gas supply unit 60 to the exposed surface 42A. With this configuration, water and foreign matter can be removed from the exposed surface 42A, and reduction in accuracy of detecting the electromagnetic waves L can be more suitably suppressed. The following describes the gas supply unit 60.

<Embodiment A>

The opening 32 according to an embodiment A preferably has a circular shape when viewed from a direction along the central axis of the opening 32. The circular shape herein is not limited to a perfect circle. The circular shape includes shapes that deviate from a perfect circle within the range of typical tolerance and can also be referred to as a substantially circular shape. The opening 32 does not necessarily have a circular shape and may have any desired shape when viewed from a direction along the central axis of the opening 32. The opening 32 may have an elliptical or polygonal shape, for example, when viewed from a direction along the central axis of the opening 32.

The area of the opening 32 is preferably 5 cm$^2$ or smaller, more preferably 0.01 cm$^2$ to 2 cm$^2$, and still more preferably 0.01 cm$^2$ to 1 cm$^2$. By setting the area of the opening 32 within this range, liquid, such as rain, and foreign matter can be prevented from entering the opening 32, and the electromagnetic waves L can be properly captured. The area of the opening 32 refers to the area of the opening 32 when viewed from a direction along the central axis of the opening 32.

The area of the transmission member 42 is preferably 5 cm$^2$ or smaller, more preferably 0.01 cm$^2$ to 2 cm$^2$, and still more preferably 0.01 cm$^2$ to 1 cm$^2$. By setting the area of the transmission member 42 within this range, liquid, such as rain, and foreign matter can be prevented from adhering to the transmission member 42, and the electromagnetic waves L can be properly captured. The area of the transmission member 42 refers to the area of the transmission member 42 when viewed from a direction along the central axis of the transmission member 42.

(Gas supply unit)

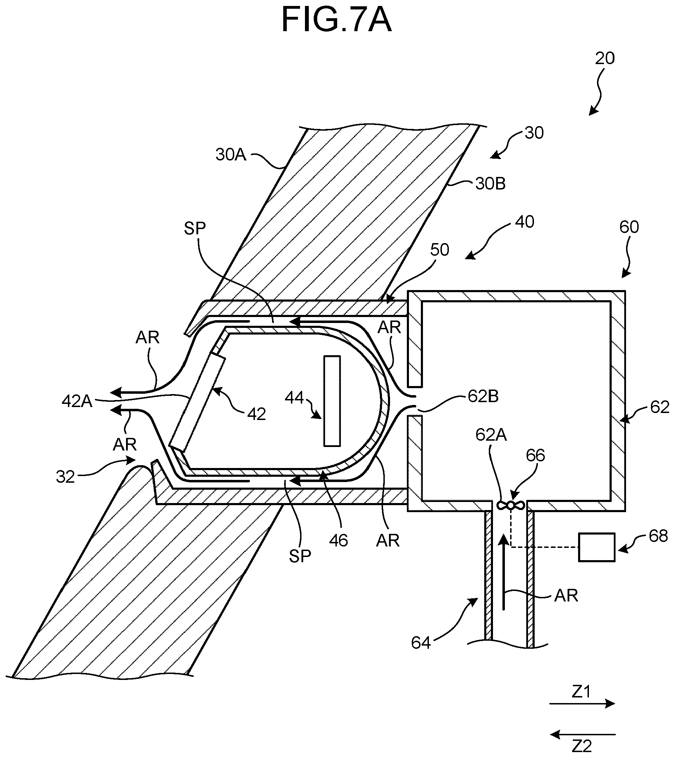

FIG. 7A is a schematic sectional view of the vehicle resin member according to the embodiment A. As illustrated in FIG. 7A, the vehicle resin member 20 preferably further includes the gas supply unit 60. In this case, as illustrated in FIG. 7A, the sensor unit 40 preferably has a double-pipe structure with an outer pipe 50 surrounding the outer periphery of the storage part 46. The outer pipe 50 is a cylindrical member extending from the end in the Z1 direction to the end in the Z2 direction and opens at the end in the Z2 direction. The outer pipe 50 is provided surrounding the outer peripheral surface of the storage part 46 with its inner peripheral surface separated from the outer peripheral surface of the storage part 46. When the space between the outer peripheral surface of the storage part 46 and the inner peripheral surface of the outer pipe 50 is referred to as a space SP, the space SP communicates with the space in the Z2 direction with respect to the surface 30A of the resin member 30 (space on the outside of the vehicle). The outer pipe 50 preferably has such a shape that the inner diameter decreases as it extends in the Z2 direction at the end in the Z2 direction. In other words, the space SP preferably has a smaller sectional area as it extends in the Z2 direction at the end in the Z2 direction. By forming the space SP in this manner, the gas AR injected from the space SP can have higher flow velocity, thereby properly removing water and foreign matter. The outer pipe 50 may have any desired shape. The outer pipe 50 does not necessarily have a cylindrical shape and may have a polygonal cylindrical shape, for example.

The gas supply unit 60 supplies the gas AR to the exposed surface 42A of the transmission member 42. The gas AR supplied to the exposed surface 42A from the gas supply unit 60 is discharged into the space in the Z2 direction with respect to the surface 30A of the resin member 30 (space on the outside of the vehicle) while removing water and foreign matter on the exposed surface 42A. The gas AR according to the present embodiment is air. The gas supply unit 60 may supply air used for air conditioning of the vehicle V to the exposed surface 42A as the gas AR, may supply air accumulated in a separate tank to the exposed surface 42A as the gas AR, or may take in outside air and supply it to the exposed surface 42A as the gas AR. When using outside air, it is preferable to use outside air from which foreign matter is removed by a filter or the like. As described above, the present embodiment uses air as the gas AR. The gas AR, however, is not limited to air and may be any desired gas. To prevent outside air from entering when the vehicle is parked, for example, the gas supply unit 60 may be provided with a valve member, which is not illustrated, at any desired position to shut off an air current.

The gas supply unit 60 according to the present embodiment supplies the gas AR toward the exposed surface 42A from the Z1 direction with respect to the transmission member 42. More specifically, the gas supply unit 60 according to the present embodiment supplies the gas AR into the space SP from the Z1 direction with respect to the transmission member 42. The gas AR flows in the Z1 direction in the space SP, passes over the exposed surface 42A of the transmission member 42 provided at the end of the space SP in the Z2 direction, and is discharged into the space in the Z2 direction with respect to the surface 30A of the resin member 30 (space on the outside of the vehicle) .

The following describes a detailed configuration of the gas supply unit 60. As illustrated in FIG. 7A, the gas supply unit 60 includes a housing 62, a connection pipe 64, a blower 66, and a control unit 68. The housing 62 is provided in the Z1 direction with respect to the transmission member 42. More specifically, in the example in FIG. 7A, the housing 62 is provided in the Z1 direction with respect to the storage part 46 and closes the end of the outer pipe 50 in the Z1 direction. The housing 62 has openings 62A and 62B that connect the outside of the housing 62 and the space inside the housing 62. The opening 62A according to the present embodiment is open in the lower surface of the housing 62 in the vertical direction. The position of the opening 62A, however, is not limited thereto and may be any desired position. The opening 62B connects the space SP between the storage part 46 and the outer pipe 50 and the space inside the housing 62. The opening 62B according to the present embodiment is open in the surface of the housing 62 in the Z2 direction. The opening 62B, however, may be formed at any desired position as long as it connects the space SP and the space inside the housing 62. Not one but a plurality of openings 62B may be formed.

The connection pipe 64 is a pipe connected to the opening 62A. The connection pipe 64 is also connected to a supply source (not illustrated) of the gas AR and allows the gas AR from the supply source to flow into the housing 62. The supply source of the gas AR may be any desired source, and it may be air conditioning equipment of the vehicle V, a tank that accumulates the gas AR, a pump, or a mechanism that takes in outside air, for example.

The blower 66 is provided in the connection pipe 64. The blower 66 is driven, thereby causing the gas AR to flow from the connection pipe 64 into the housing 62. The blower 66 is not necessarily provided in the connection pipe 64 and may be provided at any desired position where it can cause the gas AR to flow into the housing 62.

The control unit 68 is a device that drives the blower 66. The control unit 68 may be an electronic control unit (ECU) or a circuit that drives the blower 66, for example.

The gas supply unit 60 has the configuration described above. To supply the gas AR from the gas supply unit 60 to the exposed surface 42A of the transmission member 42, the control unit 68 drives the blower 66. When the blower 66 is driven, the gas AR is supplied from the connection pipe 64 into the housing 62. In the housing 62, the gas AR is pressurized to a predetermined pressure, and the pressurized gas AR is supplied into the space SP through the opening 62B. The gas AR flows in the Z2 direction in the space SP, passes over the exposed surface 42A of the transmission member 42 provided at the end of the space SP in the Z2 direction, and is discharged into the space in the Z2 direction (space outside the vehicle) with respect to the surface 30A of the resin member 30. As a result, water and foreign matter on the exposed surface 42A are removed.

The gas supply unit 60 preferably supplies the gas AR such that the pressure of the gas AR on the exposed surface 42A is higher than the pressure acting on the exposed surface 42A in the Z1 direction. The pressure acting on the exposed surface 42A in the Z1 direction is also referred to as dynamic pressure exerted by the travel of the vehicle V. The gas supply unit 60 according to the present embodiment preferably takes in the gas AR such that pressure P of the gas AR in the housing 62 satisfies the following expression (1). In other words, the gas supply unit 60 is preferably designed such that the pressure P of the gas AR in the housing 62 satisfies the following expression (1). By setting the volume of the housing 62, the area of the opening 62B, and the driving force of the blower 66, for example, the pressure P of the gas AR in the housing 62 can be set to a desired value.

$$P > P0 + PL \qquad (1)$$

In Expression (1), PL is pressure drop in the space SP. P0 is pressure acting on the exposed surface 42A in the Z1 direction and is dynamic pressure exerted by the travel of the vehicle V. In other words, the pressure P is preferably set to be larger than the sum of the pressure drop in the space SP and the dynamic pressure acting on the exposed surface 42A. By setting the pressure P in this manner, a sufficient flow velocity to purge (inject) the gas AR to the exposed surface 42A can be secured. P0 can be calculated by the following expression (2).

$$P0 = (1/2) \cdot \rho \cdot VE^2 \qquad (2)$$

In expression (2), $\rho$ is the density of outside air, and VE is the speed of the vehicle V. In this case, the gas supply unit 60 may be designed to satisfy Expressions (1) and (2) by defining the upper limit of the speed of the vehicle V and using the upper limit as VE, for example.

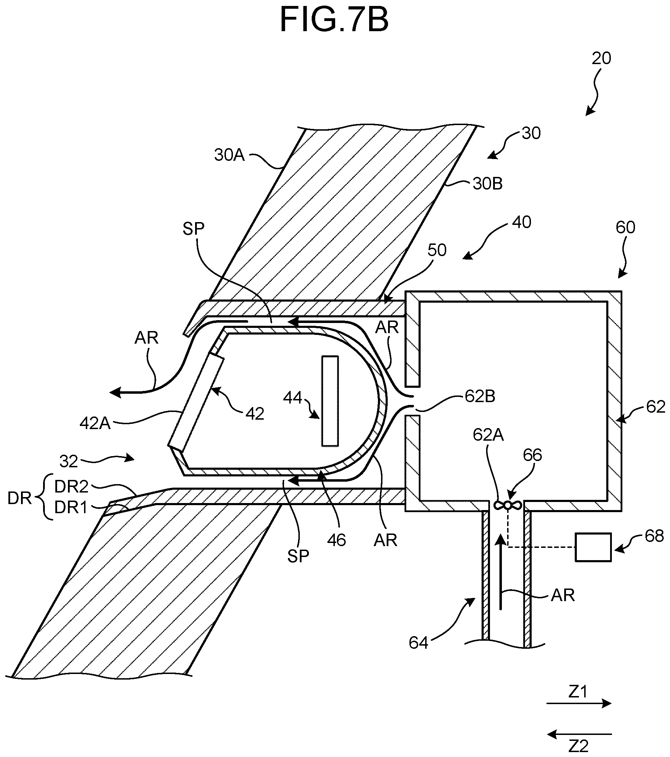

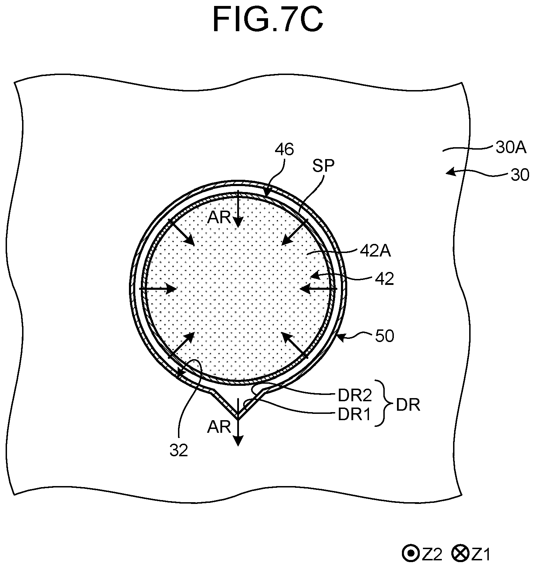

FIG. 7B is a schematic sectional view of the vehicle resin member according to another example of the embodiment A, and FIG. 7C is an enlarged front view of the opening according to the other example of the embodiment A. As illustrated in FIGS. 7B and 7C, the embodiment A may include a drain for draining raindrops and other substances at the lower part. In other words, a drain DR may be formed at the lower part of the opening 32 in the vertical direction. The drain DR may have any desired shape as long as it functions as a drain port. As illustrated in FIGS. 7B and 7C, for example, the drain DR may be composed of a groove DR1 formed on the inner peripheral surface of the opening 32 and a protrusion DR2 formed at the end of the outer pipe 50. The groove DR1 is formed at the lower part of the inner peripheral surface of the opening 32 in the vertical direction and extends along the Z2 direction to the surface 30A of the resin member 30. The protrusion DR2 is formed at the lower part of the outer pipe 50 in the vertical direction and extends along the Z2 direction to the end of the outer pipe 50 in the Z2 direction. The protrusion DR2 is disposed so as to fit into the groove DR1. As a result, the protrusion DR2 serves a channel for discharging liquid from the end in the Z2 direction to the outside and functions as the drain DR. Providing the drain DR in this manner is suitable because the liquid removed from the exposed surface 42A by the gas AR can be more likely to be discharged to the outside via the drain DR.

<Embodiment B>

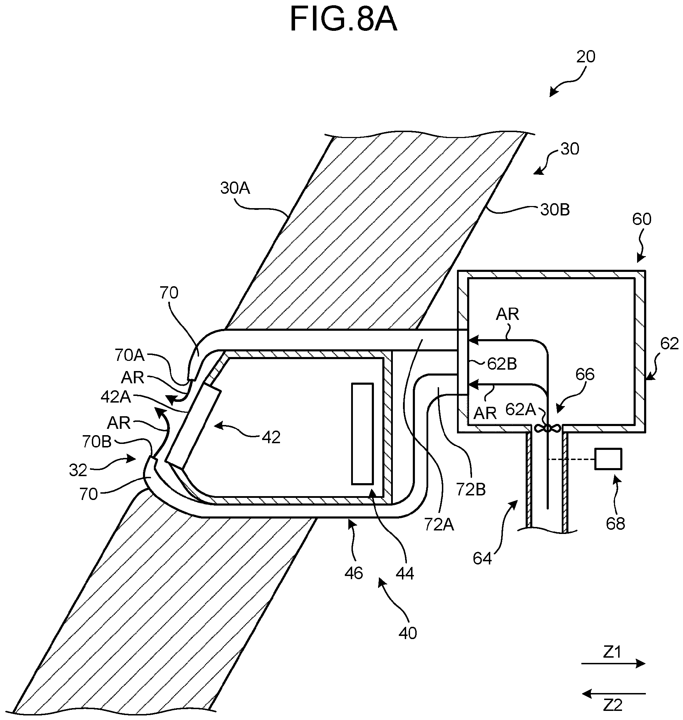

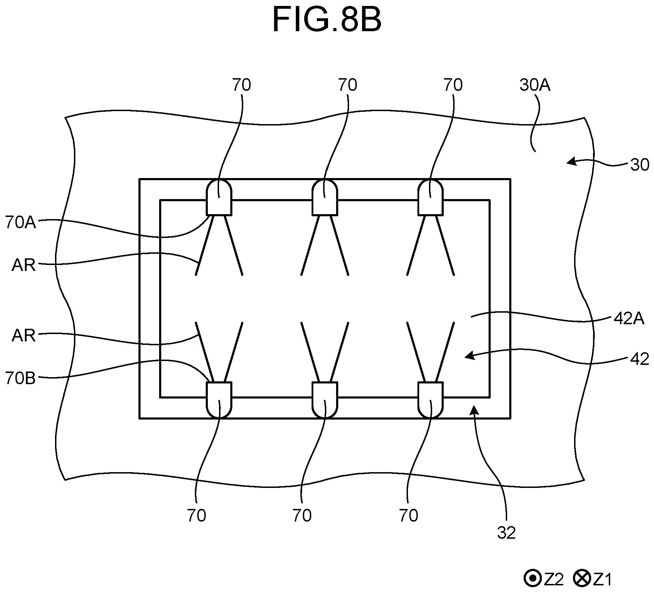

FIG. 8A is a schematic sectional view of the vehicle resin member according to an embodiment B. FIG. 8B is an enlarged front view of the opening according to the embodiment B. As illustrated in FIG. 8A, for example, the opening 32 according to the embodiment B is required to have a function to send the gas AR through small holes and apply it to the entire surface of the exposed surface 42A. While the opening 32 according to the embodiment B typically has a rectangular or other shape, it may have any desired shape.

The height of the opening 32 according to the embodiment B is preferably smaller than the height L2 of the resin member 30, and specifically 200 mm or smaller for the design of the resin member 30. The height of the opening 32 is preferably 10 mm to 100 mm, and more preferably 20 mm to 80 mm. The height of the opening 32 herein refers to the length of the opening 32 in the vertical direction.

As described with reference to FIG. 7A, the gas supply unit 60 is configured to supply the gas AR to the space SP of the sensor unit 40 according to the embodiment A. The sensor unit 40 and the gas supply unit 60, however, may have any desired configuration as long as they can supply the gas AR to the exposed surface 42A. As illustrated in FIG. 8A, for example, the gas supply unit 60 according to the embodiment B may include nozzles 70 connected to an upper pipe 72A and a lower pipe 72B and opening toward the exposed surface 42A. The gas supply unit 60 may be configured to supply the gas AR from ends 70A and 70B of the nozzles 70 to the exposed surface 42A. In other words, the nozzles 70 are configured such that the nozzle end 70A is connected to the upper pipe 72A and that the nozzle end 70B is connected to the lower pipe 72B. The upper pipe 72A and the nozzle end 70A are preferably provided at the upper part of the opening 32 in the vertical direction, and the lower pipe 72B and the nozzle end 70B are preferably provided at the lower part of the opening 32 in the vertical direction. The upper pipe 72A is connected to the opening 62B of the housing 62, and the gas AR pressurized in the housing 62 passes through the upper pipe 72A and is injected from the nozzle end 70A toward the exposed surface 42A. The lower pipe 72B is also connected to the opening 62B of the housing 62, and the gas AR pressurized in the housing 62 passes through the lower pipe 72B and is injected from the nozzle end 70B toward the exposed surface 42A. The gas AR injected toward the exposed surface 42A passes over the exposed surface 42A and is discharged into the space in the Z2 direction with respect to the surface 30A of the resin member 30 (space on the outside of the vehicle). As a result, water and foreign matter on the exposed surface 42A are removed. In this case, the sensor unit 40 does not necessarily have the outer pipe 50, and the ends 70A and 70B of the nozzles 70 are provided near the exposed surface 42A. While the ends 70A and 70B of the nozzles 70 are provided at any desired positions, they are preferably disposed at positions outside the exposed surface 42A in the radial direction with the end 70A facing inward in the radial direction, for example. The radial direction herein refers to the radial direction about the central axis of the opening 32. While the nozzles 70 are connected to the housing 62 in the example in FIG. 8A, they are not necessarily connected to the housing 62 and may be connected to the supply source of the gas AR, for example. The number of nozzles 70 is not limited to one and may be plural. While the transmission member 42 is the lens of the sensor unit 40 in the examples provided with the gas supply unit 60 illustrated in FIGS. 7A and 8A, the configuration of the gas supply unit 60 is also applicable to a case where the transmission member 42 is a cover as illustrated in the example in FIG. 6.

While the direction in which the gas AR is sent from the nozzles 70 is not particularly limited, it is effective to flow the gas AR from the upper side when the vehicle is parked or traveling at low speed (e.g., 10 to 20 km/h) and from the lower side when the vehicle is traveling at medium speed or faster (that is, faster than the low speed). In this case, the end 70A of the nozzle 70 disposed on the upper side in the vertical direction faces downward in the vertical direction, and the end 70B of the nozzle 70 disposed on the lower side in the vertical direction faces upward in the vertical direction. When acquiring the information that the vehicle is stopped or traveling at low speed, the control unit 68 causes the gas AR to be supplied from the end 70A of the nozzle 70 disposed on the upper side in the vertical direction to supply the gas AR to the exposed surface 42A of the transmission member 42 from the upper side. In this case, the control unit 68 stops the gas supply from the end 70B of the nozzle 70 disposed on the lower side in the vertical direction. By contrast, when acquiring the information that the vehicle is traveling at medium speed or faster, the control unit 68 causes the gas AR to be supplied from the end 70B of the nozzle 70 disposed at the lower side in the vertical direction to supply the gas AR to the exposed surface 42A of the transmission member 42 from the lower side. In this case, the control unit 68 stops the gas supply from the end 70A of the nozzle 70 disposed at the upper side in the vertical direction.

<Embodiment C>

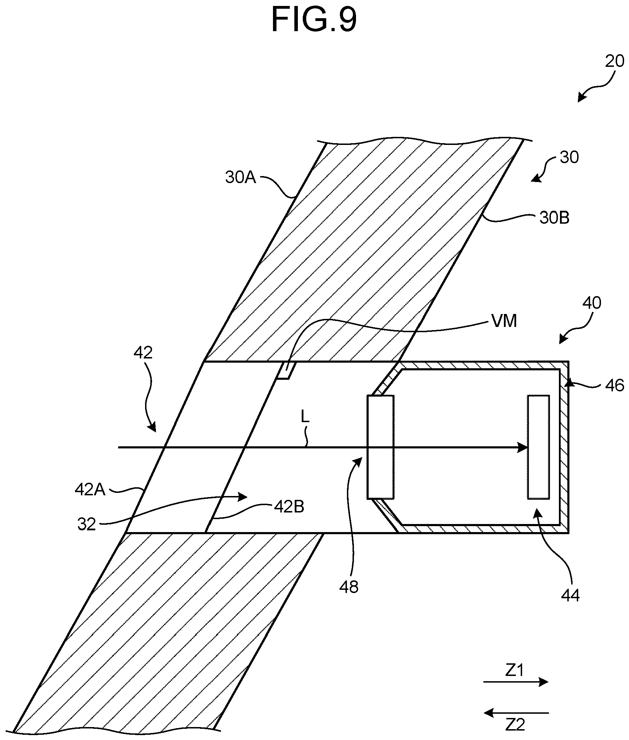

FIG. 9 is a schematic sectional view of the vehicle resin member according to an embodiment C. In the embodiment C, a vibration member VM is preferably provided to at least one of the surfaces of the transmission member 42, that is, at least one of the exposed surface 42A and a surface 42B opposite thereto. When the vibration member VM applies vibrations to the transmission member 42, waterdrops and raindrops are micronized and/or atomized, thereby increasing in surface area. As a result, the waterdrops and the raindrops can be more likely to be removed from the surface of the transmission member 42. While the vibration member VM may be provided on either the exposed surface 42A or the surface 42B of the transmission member 42, it is preferably provided on the surface 42B to prevent contamination of the vibration member VM itself. The vibration member VM may be a piezoelectric element, for example. The vibration member VM is connected to a power source, which is not illustrated, and vibrates by application of voltage from the power source. The frequency of vibrations by the vibration member VM is preferably 100 kHz to 5 MHz.

The vehicle resin member according to the embodiment A or the embodiment B described above may further include the vibration member VM on at least one of the surfaces of the transmission member 42 similarly to the vehicle resin member according to the embodiment C.

(Another example of the transmission member)

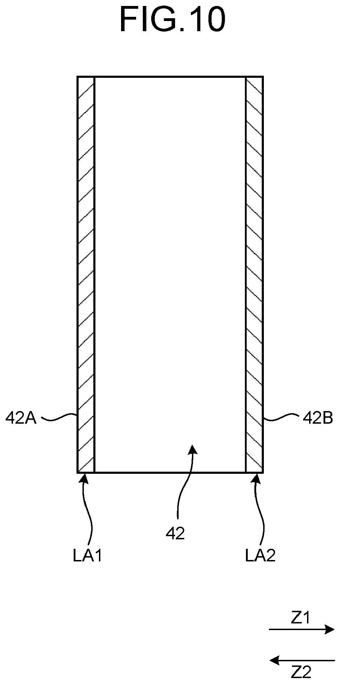

FIG. 10 is a schematic of another example of the transmission member. As illustrated in FIG. 10, the transmission member 42 may have an anti-reflection film LA1 on the exposed surface 42A and an anti-reflection film LA2 on the surface 42B opposite to the exposed surface 42A. The anti-reflection films LA1 and LA2 are anti-reflection (AR) films that suppress reflection of the electromagnetic waves L. The anti-reflection films LA1 and LA2 can be made of any desired material according to the wavelength of the electromagnetic waves L to be detected by the sensor unit 40. The anti-reflection films are not necessarily formed on both the exposed surface 42A and the surface 42B as illustrated in FIG. 10. Alternatively, an anti-reflection film that suppresses reflection of the electromagnetic waves L may be formed on at least one of the exposed surface 42A and the surface 42B.

If the sensor is provided on the inner side of the window member 10, it is difficult to form a film on only part of the window member 10 to suppress reflection of the electromagnetic waves L. By contrast, the present embodiment captures the electromagnetic waves L through the opening 32 of the resin member 30, and the anti-reflection films simply need to be formed only on the transmission member 42.

The transmission member 42 may have a conductive film on the side closer to the surface 42B than the exposed surface 42A. In this case, the conductive film is connected to wiring through which an electric current flows. The electric current is applied to the conductive film via the wiring. The transmission member 42 is heated by application of the electric current, thereby removing fogging or melting ice on the exposed surface 42A. The method for removing fogging of the exposed surface 42A is not limited to forming the conductive film. By heating the gas AR supplied from the gas supply unit 60 by a PTC heater, for example, to make it a high-temperature gas, the gas AR can heat the transmission member 42 and remove fogging.

The exposed surface 42A of the transmission member 42 may be subjected to water-repellent treatment. In other words, the exposed surface 42A may be water-repellent. By making the exposed surface 42A water-repellent, waterdrops on the exposed surface 42A can be made smaller and properly removed by the gas AR.

The exposed surface 42A of the transmission member 42 may be subjected to hydrophilic or water-absorption treatment. In other words, the exposed surface 42A may be hydrophilic. By making the exposed surface 42A hydrophilic or water-absorbent, water can be more likely to flow down from the exposed surface 42A and can be properly removed from the exposed surface 42A. This processing can also suppress fogging.

<Embodiment D>

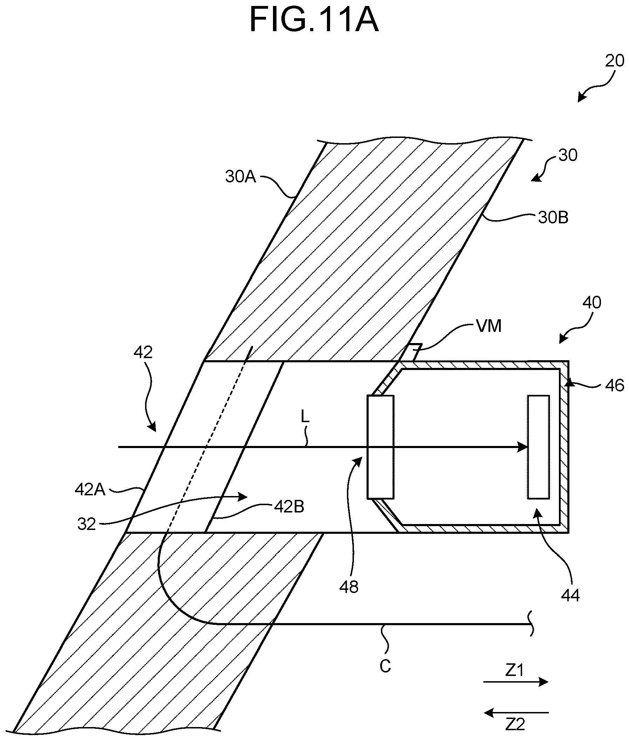

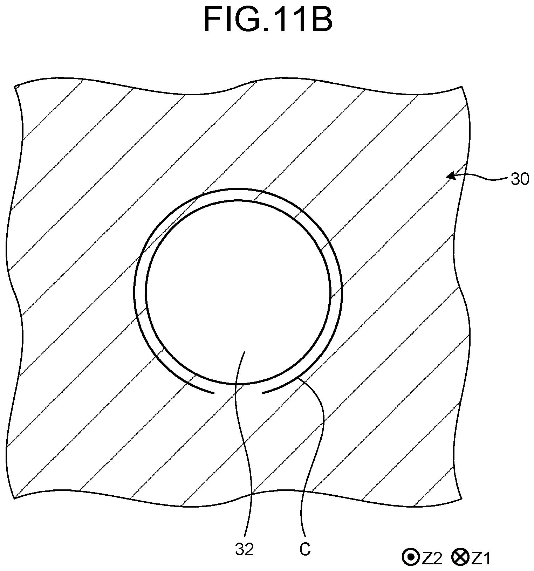

FIG. 11A is a schematic sectional view of the vehicle resin member according to an embodiment D. FIG. 11B is a schematic sectional view of the transmission member of the vehicle resin member according to the embodiment D in a planar direction. In the embodiment D, the vibration member VM is preferably provided to at least one of the surfaces of the resin member 30, that is, a first surface 30A or a second surface 30B. When the vibration member VM applies vibrations to the resin member 30, water molecules adhering to the vehicle resin member 20 agglomerate and are more likely to be removed as waterdrops from the exposed surface 42A of the transmission member 42. If the exposed surface 42A of the transmission member 42 is subjected to water-repellent treatment, water droplets are still more likely to be removed. While the vibration member VM may be provided on either the surface 30A or the surface 30B of the resin member 30, it is preferably provided on the surface 30B to prevent contamination of the vibration member VM itself. The vibration member VM may be a piezoelectric element, for example. The frequency of vibrations by the vibration member VM is preferably 20 kHz to 100 kHz.

As illustrated in FIGS. 11A and 11B, the vehicle resin member according to the embodiment D preferably includes a conducting wire C embedded around the opening 32. The conducting wire C is connected to a power source, which is not illustrated, and an electric current from the power source flows therethrough. By applying an electric current to the conducting wire C and heating the resin member 30, fogging of the exposed surface 42A of the transmission member 42 can be removed, and reduction in accuracy of detecting the electromagnetic waves L can be more suitably suppressed.

The vehicle resin member according to the embodiment A or the embodiment B described above may further include the vibration member VM on at least one of the surfaces of the transmission member 42 and/or the resin member 30 similarly to the vehicle resin member according to the embodiment C and/or the embodiment D. The vehicle resin member according to the embodiment A or the embodiment B may further include the conducting wire C embedded around the opening 32 similarly to the vehicle resin member according to the embodiment D.

(Advantageous Effects)

As described above, the vehicle resin member 20 according to the present embodiment includes the resin member 30, the transmission member 42, and the sensor 44. The resin member 30 has an opening 32 that passes from a first surface 30A on the outside of the vehicle to a second surface 30B on the inside of the vehicle. The transmission member 42 is exposed on the first surface 30A through the opening 32. The sensor 44 is provided in the Z1 direction from the first surface 30A toward the second surface 30B with respect to the transmission member 42. The vehicle resin member 20 is attached to the window member 10 of the vehicle V such that the opening 32 does not overlap the window member 10 and is positioned out of reach of the wipers WP provided to the window member 10, that is, outside the wiper region AR.

If the vehicle resin member 20 according to the present embodiment is used, the sensor 44 receives and detects the electromagnetic waves L that pass through the opening 32. Therefore, the use of the vehicle resin member 20 according to the present embodiment prevents the electromagnetic waves L from being blocked by the window member 10, thereby enabling the sensor 44 to properly detect the electromagnetic waves L. Furthermore, if the resin member is provided separately from the window member, the opening in the resin member may possibly be blocked by the wipers. As a result, the sensor may possibly fail to properly receive the electromagnetic waves L, resulting in reduced detection accuracy of the sensor. By contrast, the resin member 30 according to the present embodiment is attached to the window member 10 such that the opening 32 is positioned outside the wiper region AR. Therefore, the present embodiment can prevent the opening 32 from being blocked by the wipers WP, thereby enabling the sensor to properly receive the electromagnetic waves L. Thus, the present embodiment can suppress reduction in detection accuracy of the sensor.

The vehicle resin member 20 is disposed on the upper side of the window member 10 in the vertical direction. By disposing the vehicle resin member 20 on the upper side of the window member 10, the electromagnetic waves L can be properly detected.

The vehicle resin member 20 preferably further includes the gas supply unit 60. The gas supply unit 60 supplies the gas AR toward the exposed surface 42A of the transmission member 42 exposed in the Z2 direction (on the first surface 30A). The exposed surface 42A of the transmission member 42 is exposed to the outside through the opening 32. As a result, water or foreign matter may possibly adhere to the exposed surface 42A, resulting in reduced accuracy of detecting the electromagnetic waves L. By contrast, the present embodiment can remove water and foreign matter from the exposed surface 42A by the gas supply unit 60, thereby more suitably suppressing reduction in accuracy of detecting the electromagnetic waves L.

The gas supply unit 60 preferably supplies the gas AR such that the gas AR supplied to the exposed surface 42A is discharged from the opening 32 in the Z2 direction (on the first surface 30A). In the present embodiment, the gas AR is supplied to the exposed surface 42A and then discharged to the outside of the vehicle. Therefore, the present embodiment can properly remove foreign matter, thereby more suitably suppressing reduction in accuracy of detecting the electromagnetic waves L.

The vehicle resin member 20 preferably further includes the storage part 46 and the outer pipe 50. The storage part 46 houses the sensor 44 and holds the transmission member 42 such that the exposed surface 42A of the transmission member 42 is exposed. The outer pipe 50 surrounds the outer peripheral surface of the storage part 46 with the space SP interposed between the outer pipe 50 and the outer peripheral surface of the storage part 46. The gas supply unit 60 supplies the gas AR in the space SP from the Z1 direction with respect to the transmission member 42 toward the Z2 direction (second direction) opposite to the Z1 direction. This configuration enables suitably injecting the gas AR to the exposed surface 42A, thereby more suitably suppressing reduction in accuracy of detecting the electromagnetic waves L.

The area of the opening 32 according to the embodiment A is preferably 5 cm$^2$ or smaller. By setting the area of the opening 32 within this range, foreign matter is prevented from entering into the opening 32, and reduction in detection accuracy of the sensor can be properly suppressed.

The opening 32 according to the embodiment A preferably has a circular shape. By making the opening 32 circular shape, the electromagnetic waves L can be properly captured, and reduction in detection accuracy of the sensor can be properly suppressed.

In the opening 32 according to the embodiment B, the gas supply unit 60 may include the nozzles 70, and the gas AR may be injected from the nozzles 70 toward the exposed surface 42A. This configuration enables suitably injecting the gas AR to the exposed surface 42A, thereby more suitably suppressing reduction in accuracy of detecting the electromagnetic waves L.

The transmission member 42 is preferably provided with the anti-reflection film that suppresses reflection of electromagnetic waves L incident on the sensor 44 on at least one of the exposed surface 42A exposed in the Z2 direction and the surface 42B opposite to the exposed surface 42A. This configuration can suppress reflection of the electromagnetic waves L, thereby more suitably suppressing reduction in accuracy of detecting the electromagnetic waves L.

The transmission member 42 is preferably provided with a conductive layer on the side closer to the other surface 42B than the exposed surface 42A exposed in the Z2 direction. This configuration enables heating the transmission member 42 by applying an electric current to the conductive layer. Therefore, fogging of the exposed surface 42A can be removed, and reduction in accuracy of detecting the electromagnetic waves L can be more suitably suppressed.

The exposed surface 42A of the transmission member 42 may be water-repellent. By making the exposed surface 42A water-repellent, waterdrops on the exposed surface 42A can be made smaller and properly removed by the gas AR.

The exposed surface 42A of the transmission member 42 may be hydrophilic or water-absorbent. By making the exposed surface 42A hydrophilic, water can be more likely to flow down from the exposed surface 42A and can be properly removed from the exposed surface 42A. By making the exposed surface 42A water-absorbent, water on the exposed surface 42A can be absorbed and properly removed from the exposed surface 42A.

The exposed surface 42A of the transmission member 42 may be made of chalcogenide glass, colorless soda-lime glass, aluminosilicate glass, borosilicate glass, silica glass, or high infrared transmission glass. By using such material for the transmission member 42, the electromagnetic waves L can be properly transmitted, and reduction in accuracy of detecting the electromagnetic waves L can be more suitably suppressed.

The vehicle window member W according to the present embodiment includes the vehicle resin member 20 and the window member 10. The resin member 30 of the vehicle resin member 20 is attached to the window member 10 such that the opening 32 does not overlap the window member 10 and is positioned out of reach of the wipers WP provided to the window member 10. This configuration can suppress reduction in detection accuracy of the sensor because the vehicle resin member 20 is provided.

The vehicle V according to the present embodiment includes the vehicle window member W. This configuration can suppress reduction in detection accuracy of the sensor because the vehicle resin member 20 is provided.

While the exemplary embodiments according to the present invention have been described, the contents according to the embodiments are not intended to limit the embodiments. The components described above include components easily conceivable by those skilled in the art and components substantially identical therewith, that is, components within what is called the range of equivalence. Furthermore, the components described above can be appropriately combined. Furthermore, various omissions, substitutions, or modifications of the components can be made without departing from the gist of the embodiments described above.

Reference Signs List

| | |
|---|---|
| 10 | window member |
| 20 | vehicle resin member |
| 30 | resin member |
| 30A, 30B | surface |
| 32 | opening |
| 40 | sensor unit |
| 42 | transmission member |
| 42A | exposed surface |
| 44 | sensor |
| 46 | storage part |
| 50 | outer pipe |
| 60 | gas supply unit |
| AR | gas |
| L | electromagnetic waves |
| SP | space |
| V | vehicle |
| W | vehicle window member |

**Claims**

1. A vehicle resin member comprising:

   a resin member having an opening that passes from a first surface on an outside of a vehicle to a second surface on an inside of the vehicle;
   a transmission member exposed on the first surface through the opening; and
   a sensor provided in a first direction from the first surface toward the second surface with respect to the transmission member, wherein the vehicle resin member is attached to a window member of the vehicle such that the opening does not overlap the window member and is positioned out of reach of a wiper provided to the window member.

2. The vehicle resin member according to claim 1, wherein the vehicle resin member is disposed on an upper side of the window member in a vertical direction.

3. The vehicle resin member according to claim 1 or 2, further comprising a gas supply unit configured to supply gas toward an exposed surface of the transmission member exposed on the first surface.

4. The vehicle resin member according to claim 3, wherein the gas supply unit supplies the gas such that the gas supplied to the exposed surface is discharged from the opening on the first surface.

5. The vehicle resin member according to claim 3 or 4, further comprising a storage part that houses the sensor and holds the transmission member such that the exposed surface of the transmission member is exposed, and an outer pipe surrounding an outer peripheral surface of the storage part with a space interposed between the outer pipe and an outer peripheral surface of the storage part, wherein the gas supply unit supplies the gas in the space from the first direction with respect to the transmission member toward a second direction opposite to the first direction.

6. The vehicle resin member according to claim 5, wherein the area of the opening is 5 cm$^2$ or smaller.

7. The vehicle resin member according to claim 5 or 6, wherein the opening has a substantially circular shape.

8. The vehicle resin member according to claim 3 or 4, wherein the opening is provided with a nozzle in the gas supply unit, and the gas is injected from the nozzle toward the exposed surface.

9. The vehicle resin member according to any one of claims 1 to 8, comprising a vibration member on at least one of the surfaces of the transmission member.

10. The vehicle resin member according to any one of claims 1 to 9, wherein the transmission member is provided with an anti-reflection film that suppresses reflection of an electromagnetic wave incident on the sensor on at least one of the exposed surface exposed on the first surface side and a surface opposite to the exposed surface.

11. The vehicle resin member according to any one of claims 1 to 10, wherein the transmission member is provided with a conductive layer on a side closer to the second surface than the exposed surface exposed on the first surface.

12. The vehicle resin member according to any one of claims 1 to 11, wherein the exposed surface of the transmission member exposed on the first surface is water-repellent.

13. The vehicle resin member according to any one of claims 1 to 11, wherein the exposed surface of the transmission member exposed on the first surface is hydrophilic or water-absorbent.

14. The vehicle resin member according to any one of claims 1 to 13, wherein the exposed surface of the transmission member exposed on the first surface is made of chalcogenide glass, colorless soda-lime glass, aluminosilicate glass, borosilicate glass, silica glass, or high infrared transmission glass, or high infrared transmission glass.

15. The vehicle resin member according to any one of claims 1 to 14, comprising a vibration member on at least one of the surfaces of the resin member.

16. The vehicle resin member according to any one of claims 1 to 15, wherein the resin member comprises a conducting wire embedded around the opening.

17. A vehicle window member comprising the vehicle resin member according to any one of claims 1 to 16 and a window member, wherein the resin member is attached to the window member of the vehicle such that the opening does not overlap the window member and is positioned out of reach of a wiper provided to the window member.

18. A vehicle comprising the vehicle window member according to claim 17.

# FIG.1

# FIG.2

# FIG.3

FIG.4A

FIG.4B

FIG.4C

FIG.4D

FIG.4E

# FIG.5

# FIG.6

# FIG.7A

# FIG.7B

# FIG.7C

# FIG.8A

# FIG.8B

⊙Z2 ⊗Z1

# FIG.9

# FIG.10

42A ⌒                    ⌒ 42B

42

LA1          42          LA2

$$\xrightarrow{\text{Z1}}$$

$$\xleftarrow{\text{Z2}}$$

# FIG.11A

# FIG.11B

## INTERNATIONAL SEARCH REPORT

| International application No. |
| --- |
| **PCT/JP2021/041350** |

**A. CLASSIFICATION OF SUBJECT MATTER**

***B60R 11/02***(2006.01)i; ***G01S 7/03***(2006.01)i; ***B60S 1/02***(2006.01)i
FI: B60R11/02 Z; B60S1/02 400Z; G01S7/03 246

According to International Patent Classification (IPC) or to both national classification and IPC

**B. FIELDS SEARCHED**

Minimum documentation searched (classification system followed by classification symbols)

B60R11/02; G01S7/03; B60S1/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2016-113142 A (RICOH CO., LTD.) 23 June 2016 (2016-06-23) paragraphs [0007], [0008], fig. 1, 2, 6 | 1-2, 17-18 |
| Y | | 3-4, 8-16 |
| A | | 5-7 |
| X | US 2007/0216768 A1 (FORD GLOBAL TECHNOLOGIES, LLC) 20 September 2007 (2007-09-20) paragraphs [0004], [0033], [0035], fig. 3, 5 | 1-2, 17-18 |
| Y | | 3-4,8-16 |
| A | | 5-7 |
| Y | JP 2018-076075 A (KOITO MANUFACTURING CO., LTD.) 17 May 2018 (2018-05-17) paragraph [0001], fig. 1-28 | 3-4, 8-16 |
| Y | JP 2020-157893 A (SUBARU CORP.) 01 October 2020 (2020-10-01) paragraphs [0002], [0005] | 9-16 |
| Y | JP 6-258713 A (SHARP CORP.) 16 September 1994 (1994-09-16) paragraph [0007] | 11-14, 16 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 December 2021** | **21 December 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2021/041350**

C.    DOCUMENTS CONSIDERED TO BE RELEVANT

| Category* | Citation of document, with indication, where appropriate, of the relevant passages | Relevant to claim No. |
|-----------|-----------------------------------------------------------------------------------|-----------------------|
| Y | Microfilm of the specification and drawings annexed to the request of Japanese Utility Model Application No. 79391/1992 (Laid-open No. 37802/1994) (MURAKAMI MEIDO CORP.) 20 May 1994 (1994-05-20), fig. 1-3 | 16 |

Form PCT/ISA/210 (second sheet) (January 2015)

**INTERNATIONAL SEARCH REPORT**
Information on patent family members

International application No.

**PCT/JP2021/041350**

| Patent document cited in search report | | | Publication date (day/month/year) | Patent family member(s) | | | Publication date (day/month/year) |
|---|---|---|---|---|---|---|---|
| JP | 2016-113142 | A | 23 June 2016 | EP 3034359 A1 paragraphs [0006], [0007], fig. 1A, 1B, 2A, 2B, 6A, 6B | | | |
| US | 2007/0216768 | A1 | 20 September 2007 | DE 102007012993 A1 | | | |
| | | | | CN 101037099 A | | | |
| JP | 2018-076075 | A | 17 May 2018 | US 2018/0186342 A1 paragraph [0001], fig. 1A-28B | | | |
| | | | | WO 2017/002878 A1 | | | |
| | | | | EP 3318454 A1 | | | |
| | | | | CN 107709106 A | | | |
| JP | 2020-157893 | A | 01 October 2020 | (Family: none) | | | |
| JP | 6-258713 | A | 16 September 1994 | (Family: none) | | | |
| JP | 6-37802 | U1 | 20 May 1994 | (Family: none) | | | |

Form PCT/ISA/210 (patent family annex) (January 2015)

**EP 4 245 611 A1**

**REFERENCES CITED IN THE DESCRIPTION**

**Patent documents cited in the description**

- US 20070216768
- WO 2020017495 A